# EUROPÄISCHE PATENTANMELDUNG

(11) **EP 1 560 173 A1**
(43) Veröffentlichungstag der Anmeldung: **03.08.2005**
(21) Anmeldenummer: 05001734.2
(22) Anmeldetag: 27.01.2005
(51) Int. Cl.: G07F 7/10

(54) **System mit einem Endgerät und einem tragbaren Datenträger**

(30) Priorität: 30.01.2004 DE 102004005043
(71) Anmelder: Giesecke & Devrient GmbH, 81677 München (DE)
(72) Erfinder: Meister, Gisela, Dr., 81737 München (DE); Ness, Werner, 8576 Unterschleissheim (DE); Wacker, Dirk, Dr., 81541 München (DE)

(57) **Zusammenfassung**

Die Erfindung betrifft ein System mit einem Endgerät (1) und einem tragbaren Datenträger (2), der einem Benutzer zugeordnet ist und mit dem Endgerät (1) kommunizieren kann. Beim erfindungsgemäßen System ist eine Funktionalität zum Nachweis der Authentizität des Endgeräts (1) vorgesehen, gemäß der eine im tragbaren Datenträger (2) gespeicherte und nur dem Benutzer bekannte geheime Anzeigeinformation wenigstens auszugsweise vom Endgerät (1) angezeigt wird. Die Besonderheit des erfindungsgemäßen Systems besteht darin, dass die im tragbaren Datenträger (2) gespeicherte geheime Anzeigeinformation änderbar ist, wenn eine Anwendung, für deren Durchführung eine Identifizierung des Benutzers erforderlich ist, erfolgreich durchgeführt wurde oder wenn wenigstens ein Auszug der geheimen Anzeigeinformation vom Benutzer korrekt eingegeben wurde.

## Beschreibung

Die Erfindung betrifft ein System mit einem Endgerät und einem tragbaren Datenträger. Weiterhin betrifft die Erfindung ein Verfahren zum Ändern einer in einem tragbaren Datenträger gespeicherten geheimen Anzeigeinformation.

Um mit einem tragbaren Datenträger eine Anwendung auszuführen, ist in der Regel ein Endgerät erforderlich, mit dem der tragbare Datenträger in Datenaustausch tritt. Bei vielen Anwendungen wird zudem eine Benutzeridentifizierung verlangt, die beispielsweise durch Eingabe einer persönlichen Identifizierungsnummer (PIN) mittels einer Tastatur des Endgeräts durchgeführt werden kann. Die PIN ist nur dem Benutzer bekannt und soll bei einem Verlust des tragbaren Datenträgers einen Missbrauch durch Dritte verhindern. Zur Erzielung eines möglichst hohem Sicherheitsstandards sollte dem Benutzer die Möglichkeit gegeben werden, sich von der Authentizität des Endgeräts zu überzeugen, bevor er seine PIN eingibt. Dadurch kann das Ausspähen der PIN durch ein gefälschtes Endgerät verhindert werden.

Eine mögliche Vorgehensweise zur Prüfung der Authentizität des Endgeräts durch den Benutzer ist aus der DE 41 42 964 A1 bekannt. Dort ist ein Datenaustauschsystem mit einer Vorrichtung, die insbesondere als ein Terminal zur Durchführung von Transaktionen des bargeldlosen Zahlungsverkehrs ausgebildet ist, einem tragbaren Datenträger, der einem Benutzer zugeordnet ist, und einer Anzeigeeinheit offenbart. Bei diesem System wird die Berechtigung des Benutzers zur Durchführung einer Transaktion durch die Prüfung eines vom Benutzer eingegebenen persönlichen Merkmals festgestellt. Die Daten des tragbaren Datenträgers enthalten ein nur dem Benutzer bekanntes Datenwort, das vor der Aufforderung zur Eingabe des persönlichen Merkmals in codierter Form zur Vorrichtung übertragen und nach der Decodierung durch eine in der Vorrichtung enthaltene und die Echtheit der Vorrichtung kennzeichnende kryptographische Einheit dem Benutzer zum Vergleich angezeigt wird. Dadurch wird dem Benutzer die Möglichkeit gegeben, vor der Preisgabe seines persönlichen Merkmals die Echtheit der Vorrichtung auf einfache Weise zu prüfen.

Um eine hohe Benutzerfreundlichkeit und einen möglichst hohen Sicherheitsstandard zu erzielen, ist es sinnvoll, eine Änderung des für die Anzeige vorgesehenen geheimen Datenworts auf dem tragbaren Datenträger zuzulassen. Dadurch wird dem Benutzer die Möglichkeit gegeben, das geheime Datenwort nach seinen Wünschen vorzugeben. Außerdem kann der Benutzer das geheime Datenwort im Bedarfsfall, beispielsweise wenn er befürchtet, dass eine Ausspähung stattgefunden hat, ändern. Für die Änderung des geheimen Datenworts kann beispielsweise bei einem tragbaren Datenträger, mit dessen Hilfe eine digitale Signatur erstellt wird, eine Eingabe der für die Signaturerstellung benötigten PIN verlangt werden. Das hat allerdings den Nachteil, dass ein derart ausgebildeter tragbarer Datenträger nicht bei Anwendungen eingesetzt werden kann, die eine Konformität mit dem Signaturgesetz verlangen. Diese Konformität ist nur dann gegeben, wenn die Signatur-PIN nicht für andere Zwecke als für die Signaturerstellung verwendet wird. Um dieses Problem zu vermeiden, kann eine zusätzliche PIN eigens für die Änderung des geheimen Datenworts vorgesehen werden. Dies bedeutet jedoch, dass sich der Benutzer eine weitere PIN merken müsste, so dass hierfür erhebliche Akzeptanzprobleme bestehen. Schließlich besteht noch die Möglichkeit, von einer PIN-Eingabe abzusehen und die Änderung des geheimen Datenworts nur an einem authentischen Terminal zu erlauben. Hiermit ist aber der Nachteil verbunden, dass jeder, der im Besitz des tragbaren Datenträgers ist, das geheime Datenwort ändern kann, auch wenn er dazu nicht berechtigt ist.

Die vorstehend beschriebenen Möglichkeiten zur Änderung des für die Anzeige am Endgerät vorgesehenen geheimen Datenworts sind jeweils mit Nachteilen behaftet. Dennoch besteht ein Bedarf, dem rechtmäßigen Benutzer eine Änderung des geheimen Datenworts zu ermöglichen.

Der Erfindung liegt daher die Aufgabe zugrunde, einem Benutzer eines tragbaren Datenträgers eine Änderung einer im tragbaren Datenträger gespeicherten geheimen Anzeigeinformation, mit deren Hilfe der Benutzer die Authentizität eines Endgeräts für den tragbaren Datenträger prüfen kann, auf eine sichere und komfortable Weise zu ermöglichen.

Diese Aufgabe wird durch ein System mit der Merkmalskombination des Anspruchs 1 gelöst.

Das erfindungsgemäße System weist ein Endgerät und einen tragbaren Datenträger auf, der einem Benutzer zugeordnet ist und mit dem Endgerät kommunizieren kann. Weiterhin ist beim erfindungsgemäßen System eine Funktionalität zum Nachweis der Authentizität des Endgeräts vorgesehen, gemäß der eine im tragbaren Datenträger gespeicherte und nur dem Benutzer bekannte geheime Anzeigeinformation wenigstens auszugsweise vom Endgerät angezeigt wird. Die Besonderheit des erfindungsgemäßen Systems besteht darin, dass die im tragbaren Datenträger gespeicherte geheime Anzeigeinformation änderbar ist, wenn eine Anwendung, für deren Durchführung eine Identifizierung des Benutzers erforderlich ist, erfolgreich durchgeführt wurde.

Die Erfindung hat den Vorteil, dass sich der Benutzer keine persönliche Identifizierungsnummer eigens für die Änderung der geheimen Anzeigeinformation merken muss und die Änderung der geheimen Anzeigeinformation dennoch an eine erfolgreiche Identifizierung des Benutzers geknüpft ist. Ein weiterer Vorteil besteht darin, dass das erfindungsgemäße System auch für Anwendungen geeignet ist, bei denen die für die Identifizierung des Benutzers verwendeten Daten nicht außerhalb der Anwendung genutzt werden dürfen. Dies ist beispielsweise bei Signaturanwendungen der Fall, die mit dem Signaturgesetz konform sind. Dort darf die für die Signaturerstellung vorgesehene persönliche Identifizierungsnummer nicht für andere Zwecke verwendet werden.

Die geheime Anzeigeinformation ist vorzugsweise nur dann änderbar, wenn der tragbare Datenträger seit der Durchführung der Anwendung nicht außer Betrieb genommen wurde. Dadurch wird ein naher Zusammenhang zwischen der Durchführung der Anwendung und der Änderung der geheimen Anzeigeinformation sichergestellt und verhindert, dass nach einer einmal durchgeführten Anwendung die Änderung für immer erlaubt ist.

Im Rahmen der Erfindung kann beispielsweise anhand eines Zählers geprüft werden, ob die Anwendung erfolgreich durchgeführt wurde. Dies hat den Vorteil, dass damit ein sehr geringer Aufwand verbunden ist und trotzdem eine zuverlässige Funktion sichergestellt ist.

Das erfindungsgemäße System eignet sich insbesondere auch für eine Anwendung, mit der eine digitale Signatur erstellt wird. In diesem Fall ist es von Vorteil, wenn die geheime Anzeigeinformation nur dann änderbar ist, wenn davon auszugehen ist, dass in der aktuellen Session mit dem aktuellen Signatur-Schlüssel keine digitale Signatur mehr erstellt wird.

Bei einer Abwandlung des erfindungsgemäßen Systems besteht die Besonderheit darin, dass die im tragbaren Datenträger gespeicherte geheime Anzeigeinformation änderbar ist, wenn wenigstens ein Auszug der geheimen Anzeigeinformation vom Benutzer korrekt eingegeben wurde.

Auch in diesem Fall kann eine Änderung der geheimen Anzeigeinformation durch unberechtigte Dritte verhindert werden, ohne eine zusätzliche Identifizierungsnummer einzuführen.

Um einen möglichst hohen Sicherheitsstandard zu gewährleisten, können zum Nachweis der Authentizität des Endgeräts und zur Änderung der im tragbaren Datenträger gespeicherten geheimen Anzeigeinformation unterschiedliche Auszüge der geheimen Anzeigeinformation verwendet werden.

Bei beiden Systemausführungen ist der tragbare Datenträger jeweils vorzugsweise als eine Chipkarte ausgebildet.

Mit dem erfindungsgemäßen Verfahren wird eine in einem tragbaren Datenträger gespeicherte geheime Anzeigeinformation geändert, die nur einem Benutzer bekannt ist, dem der tragbare Datenträger zugeordnet ist und die zum Nachweis der Authentizität eines Endgeräts, mit dem der tragbare Datenträger kommuniziert, wenigstens auszugsweise vom Endgerät angezeigt wird.

Eine erste Variante des erfindungsgemäßen Verfahrens zeichnet sich dadurch aus, dass eine Änderung der geheimen Anzeigeinformation nur dann zugelassen wird, wenn eine Anwendung, für deren Durchführung eine Identifizierung des Benutzers erforderlich ist, erfolgreich durchgeführt wurde.

Bei einer zweiten Variante des erfindungsgemäßen Verfahrens wird eine Änderung der geheimen Anzeigeinformation nur dann zugelassen, wenn wenigstens ein Auszug der geheimen Anzeigeinformation vom Benutzer korrekt eingegeben wurde.

Die Erfindung wird nachstehend anhand der in der Zeichnung dargestellten Ausführungsbeispiele erläutert, bei denen der tragbare Datenträger als eine Chipkarte ausgebildet ist.

Es zeigen:
- Fig. 1: eine Prinzipdarstellung des erfindungsgemäßen Systems,
- Fig. 2: ein Flussdiagramm zur Veranschaulichung der Vorgehensweise bei der Änderung der geheimen Anzeigeinformation gemäß einem ersten Ausführungsbeispiel des erfindungsgemäßen Systems,
- Fig. 3: ein stark vereinfachtes Flussdiagramm für die Durchführung einer Signaturanwendung und
- Fig. 4: ein Flussdiagramm zur Veranschaulichung der Vorgehensweise bei der Änderung der geheimen Anzeigeinformation gemäß einem zweiten Ausführungsbeispiel des erfindungsgemäßen Systems.

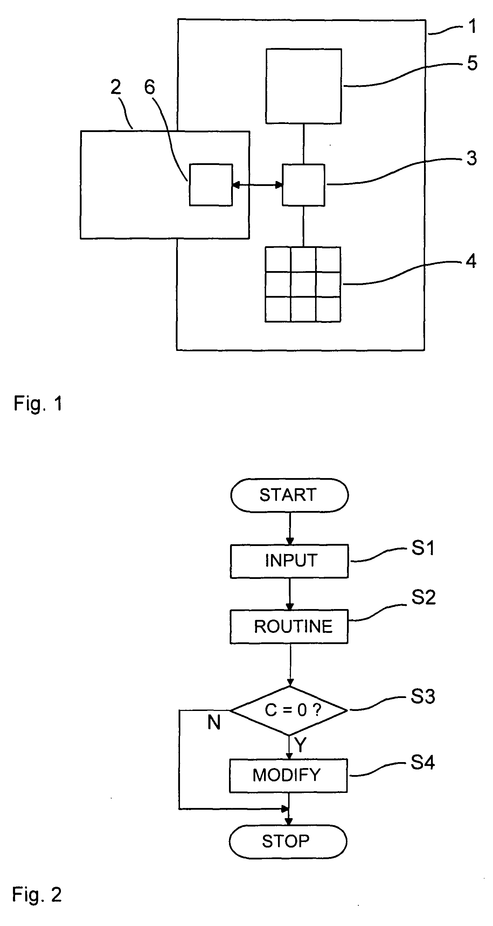

Fig. 1 zeigt eine Prinzipdarstellung des erfindungsgemäßen Systems. Das System weist ein Endgerät 1 und eine Chipkarte 2 auf. Das Endgerät 1 verfügt über eine Elektronik 3, die im Wesentlichen aus einem Mikroprozessor und ggf. weiteren elektronischen Bauteilen besteht. Weiterhin verfügt das Endgerät 1 über eine Tastatur 4 zur Eingabe von Daten und einen Bildschirm 5 zur Darstellung von Daten. Die Tastatur 4 und der Bildschirm 5 sind jeweils mit der Elektronik 3 verbunden.

Die Chipkarte 2 weist einen integrierten Schaltkreis 6 auf, der vorzugsweise als ein Mikroprozessor ausgebildet ist. In der Darstellung der Fig. 1 führen das Endgerät 1 und die Chipkarte 2 einen Datenaustausch durch. Hierzu ist die Chipkarte 2 temporär in das Endgerät 1 eingesteckt, so dass ein elektrischer Kontakt zwischen einem Kontaktfeld der Chipkarte 2 und einer Kontaktiereinheit des Endgeräts 1 ausgebildet wird. Das Kontaktfeld und die Kontaktiereinheit sind aus Gründen der Übersichtlichkeit in Fig. 1 nicht eingezeichnet. Lediglich die aus der Kontaktierung resultierende Datenverbindung zwischen dem Endgerät 1 und der Chipkarte 2 ist durch einen Doppelpfeil dargestellt. Diese Datenverbindung ist in der Regel zur Ausführung einer auf der Chipkarte 2 implementierten Anwendung unter anderem deshalb erforderlich, weil viele Anwendung Benutzereingaben benötigen, die über die Tastatur 4 des Endgeräts 1 eingegeben werden.

Eine besonders wichtige Benutzereingabe stellt eine persönliche Identifizierungsnummer (PIN) dar, die nur dem Benutzer bekannt ist und mit deren Hilfe sich der Benutzer identifiziert und dadurch der Chipkarte 2 gegenüber als zur Nutzung der Anwendung berechtigt ausweist. Da die PIN ebenfalls über die Tastatur 4 des Endgeräts 1 eingegeben wird, besteht für den Benutzer das Risiko, dass seine PIN mit Hilfe eines gefälschten Endgeräts 1 ausgespäht wird. Dies kann dadurch verhindert werden, dass eine geheime Anzeigeinformation, die lediglich dem rechtmäßigen Benutzer bekannt ist, so in der Chipkarte 2 abgelegt wird, dass sie nur von einem authentischen Endgerät 1 korrekt ausgelesen werden kann. Bevor der Benutzer seine PIN auf der Tastatur 4 des Endgeräts 1 eingibt, lässt er sich zumindest einen Teil der geheimen Anzeigeinformation am Bildschirm 5 des Endgeräts 1 anzeigen. Wird die geheime Anzeigeinformation richtig angezeigt, so kann mit hoher Wahrscheinlichkeit von einem authentischen Endgerät 1 ausgegangen werden.

Um den Benutzer die Möglichkeit zu geben, die geheime Anzeigeinformation nach seinen Wünschen vorzugeben und beispielsweise beim Verdacht eines Ausspähens zu ändern, sind im Rahmen der Erfindung verschiedene Vorgehensweisen vorgesehen, die ausschließlich dem rechtmäßigen Benutzer der Chipkarte 2 eine Änderung der geheimen Anzeigeinformation ermöglichen.

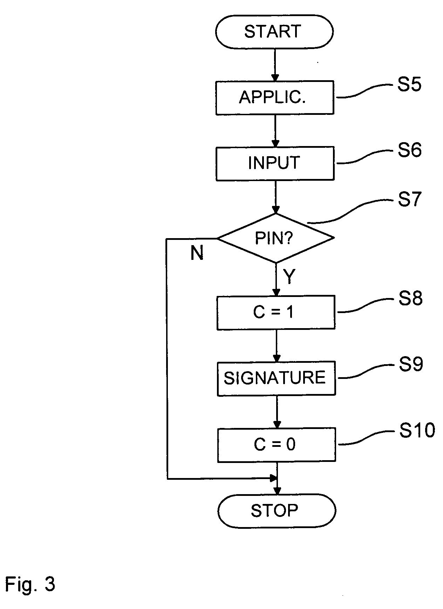

Fig. 2 zeigt ein Flussdiagramm zur Veranschaulichung der Vorgehensweise bei der Änderung der geheimen Anzeigeinformation gemäß einem ersten Ausführungsbeispiel des erfindungsgemäßen Systems. Der Durchlauf des Flussdiagramms beginnt mit einem Schritt S1, bei dem vom Benutzer über die Tastatur 4 des Endgeräts 1 eine neue geheime Anzeigeinformation eingegeben werden kann. In einem Schritt S2 wird eine Routine zur Änderung der in der Chipkarte 2 gespeicherten geheimen Anzeigeinformation aufgerufen wird. Auf Schritt S2 folgt ein Schritt S3, bei dem festgestellt wird, ob der Benutzer zur Änderung der geheimen Anzeigeinformation befugt ist. Das Kriterium für diese Befugnis besteht darin, dass zuvor eine Anwendung, die eine Identifizierung des Benutzers voraussetzt, erfolgreich ausgeführt wurde. Als Anwendung wird für die weitere Beschreibung beispielhaft eine Signaturanwendung gewählt, wobei die Identifizierung des Benutzers durch eine korrekte Eingabe einer PIN erfolgt. Bei einer Signaturanwendung kann die erfolgreiche Ausführung über einen Zähler C, der auch als Digital Signature Counter, bezeichnet wird, festgestellt werden. Wie anhand von Fig. 3 noch näher erläutert wird, weist der Zähler C einen Wert 0 auf, wenn im Rahmen der Signaturanwendung eine Signatur erstellt wurde. Zudem ist es bei einem Wert 0 des Zählers C ausgeschlossen, dass in der aktuellen Session eine weitere Signatur mit dem Signaturschlüssel erstellt wird. Im Schritt S3 wird somit konkret geprüft, ob der Zähler C den Wert 0 aufweist. Trifft dies zu, so schließt sich an Schritt S3 ein Schritt S4 an. Weist der Zähler C dagegen nicht den Wert 0 auf, so ist der Durchlauf des Flussdiagramms mit Schritt S3 beendet.

In Schritt S4, wird die bislang in der Chipkarte 2 gespeicherte geheime Anzeigeinformation durch die neu eingegebene geheime Anzeigeinformation ersetzt. Dies bedeutet, dass bei einer zukünftigen Prüfung der Authentizität des Endgeräts 1 ein positives Prüfungsergebnis dann vorliegt, wenn diese neu eingegebene geheime Anzeigeinformation am Bildschirm 5 angezeigt wird. Mit Schritt S4 ist der Durchlauf des Flussdiagramms beendet.

Das vorstehend beschriebene Flussdiagramm dient lediglich der Darstellung der prinzipiellen Vorgehensweise. Die konkreten Abläufe können sehr komplex sein und lassen sich mit den Begriffen, die in der Norm ISO/ IEC 7816-4 zur Darstellung der Sicherheitsarchitektur der Chipkarte 2 verwendet werden, folgendermaßen skizzieren: Die für einen Zugriff auf die geheime Anzeigeinformation verlangten Sicherheitsmaßnahmen sind in einem Security Condition Data Object definiert. Um den Zugriff auf die geheime Anzeigeinformation vom Wert des Zählers C abhängig zu machen, wird im Security Condition Data Object eine entsprechende Bedingung an das entsprechende Security Support Data Object formuliert.

Gemäß einer ersten Variante wird dabei im Security Condition Data Object in einem beliebigen Control Reference Template das Security Support Template '7A' mit dem Digital Signature Counter Data Object '93' angegeben. Der Wert des Data Object '93' gibt den zu überprüfenden Sollwert des Zählers C für den aktuell gesetzten Signaturschlüssel in der aktuellen Sicherheitsumgebung an und beträgt entsprechend den vorstehenden Ausführungen 0.

Gemäß einer zweiten Variante enthält das Security Condition Data Object ein separates Digital Signatur Control Reference Template ohne Usage Qualifier, um anzuzeigen, dass hiermit keine Bedingung an eine vorherige Sicherheitsmaßnahme gestellt wird. Das Digital Signatur Control Reference Template enthält ein analog zur ersten Variante ausgebildetes Security Support Template '7A'.

Auf die vorstehend beschriebene Weise ist es möglich, die Änderung der in der Chipkarte 2 gespeicherten geheimen Anzeigeinformation von einer erfolgreichen Identifizierung des Benutzers abhängig zu machen, ohne für die Änderung eigens eine Identifizierung durchführen zu müssen oder gar eine eigene PIN zu diesem Zweck einzuführen. Dies wird erfindungsgemäß durch eine indirekte Nutzung einer bereits erfolgten Identifizierung des Benutzers ermöglicht. Diese Vorgehensweise ist insbesondere auch bei einer Identifizierung des Benutzers im Rahmen einer Signaturanwendung möglich, und zwar auch dann, wenn eine gesetzlich anerkannte Signatur erstellt werden soll, wobei eine Nutzung der dabei verwendeten PIN für andere Zwecke als die Signaturerstellung nicht zulässig ist. Im Rahmen der Erfindung kann diese Bedingung eingehalten werden, da für die Durchführung der Änderung nicht eigens die Identität des Benutzers anhand der PIN geprüft wird, sondern das Ergebnis eines gesetzteskonformen Einsatzes der PIN im Rahmen der Signaturanwendung genutzt wird.

Fig. 3 zeigt ein stark vereinfachtes Flussdiagramm für die Durchführung einer Signaturanwendung. Der Durchlauf des Flussdiagramms beginnt mit einem Schritt S5, bei dem die Signaturanwendung aufgerufen wird, beispielsweise indem die Chipkarte 2 in ein entsprechendes Endgerät 1 eingeführt wird. Der bei Fig. 2 erwähnte Zähler C weist zu diesem Zeitpunkt einen undefinierten Wert auf. An Schritt S5 schließt sich ein Schritt S6, bei dem die PIN zur Identifizierung des Benutzers eingegeben wird. Danach folgt ein Schritt S7, bei dem geprüft wird, ob die PIN korrekt eingegeben wurde. Wurde ein falscher Wert für die PIN eingegeben, so ist der Durchlauf des Flussdiagramms beendet. Obwohl dies nicht explizit erwähnt ist, sind im Rahmen des bislang beschriebenen Durchlaufs Sicherheitsmaßnahmen vorgesehen, durch die die Anzahl der zugelassenen Falscheingaben der PIN begrenzt wird.

Wird in Schritt S7 festgestellt, dass der eingegebene Wert der PIN korrekt ist, so folgt auf Schritt S7 ein Schritt S8, bei dem der Zähler C auf 1 gesetzt wird. In einem Schritt S9 wird anschließend eine Signaturerstellung durchgeführt. Danach wird in einem Schritt S10 der Zähler C auf 0 gesetzt. Eine weitere Signaturerstellung mit dem Signaturschlüssel ist in der aktuellen Session nicht mehr möglich, wenn der Zähler C den Wert 0 besitzt. Somit ist der Durchlauf des Flussdiagramms beendet.

Wenn die Chipkarte 2 nach Ausführung der Signaturanwendung aus dem Endgerät 1 entfernt und dadurch außer Betrieb genommen wird, bleibt der Wert des Zählers C nicht erhalten, d. h. der Zähler C weist bei der nächsten Inbetriebnahme der Chipkarte 2 nicht mehr den Wert 0 sondern einen undefinierten Wert auf. Dies bedeutet, dass eine Änderung der geheimen Anzeigeinformation nur dann möglich ist, wenn die Chipkarte 2 im Zeitraum zwischen der Durchführung der Signaturanwendung und der Vornahme der Änderung nicht außer Betrieb genommen wird.

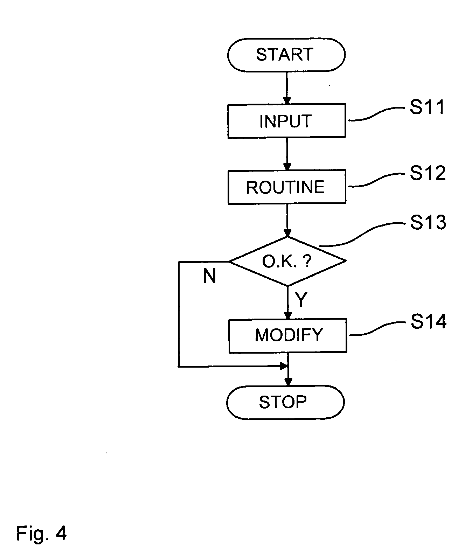

Fig. 4 zeigt ein Flussdiagramm zur Veranschaulichung der Vorgehensweise bei der Änderung der geheimen Anzeigeinformation gemäß einem zweiten Ausführungsbeispiel des erfindungsgemäßen Systems. Auch beim zweiten Ausführungsbeispiel ist es nicht erforderlich, dass sich der Benutzer eine zusätzliche PIN merkt, die ausschließlich für die Änderung der geheimen Anzeigeinformation eingesetzt wird. Stattdessen wird die geheime Anzeigeinformation selbst oder ein Teil davon für die Identifizierung des Benutzers herangezogen.

Der Durchlauf des Flussdiagramms beginnt mit einem Schritt S11, bei dem der Benutzer den derzeitig gespeicherten Wert der geheimen Anzeigeinformation sowie eine neue geheime Anzeigeinformation über die Tastatur 4 des Endgeräts 1 eingibt. Daraufhin erfolgt ein Schritt S12, bei dem eine Routine zur Änderung der in der Chipkarte 2 gespeicherten geheimen Anzeigeinformation aufgerufen wird. Dieser Wert ist lediglich dem Benutzer bekannt und kann daher zur Identifizierung des Benutzers durch die Chipkarte 2 verwendet werden. Da der Benutzer die geheime Anzeigeinformation zur Prüfung der Authentizität des Endgeräts 1 ohnehin kennen muss, entsteht für den Benutzer kein Mehraufwand. Die Tastatureingabe kann die gesamte geheime Anzeigeinformation oder auch nur einen Teil der geheimen Anzeigeinformation umfassen. Ebenso ist es möglich, für die Prüfung der Authentizität des Endgeräts 1 die gesamte geheime Anzeigeinformation oder nur einen Teil der geheimen Anzeigeinformation heranzuziehen. Insbesondere können für die Identifizierung des Benutzers und die Authentisierung des Endgeräts 1 unterschiedliche Teile der geheimen Anzeigeinformation herangezogen werden, so dass der für die Identifizierung des Benutzers benötigte Teil der geheimen Anzeigeinformation nicht im Rahmen der Authentisierung des Endgeräts 1 am Bildschirm 5 angezeigt wird.

Auf Schritt S12 folgt ein Schritt S13, bei dem der über die Tastatur 4 des Endgeräts 1 eingegebene Wert der geheimen Anzeigeinformation mit dem in der Chipkarte 2 gespeicherten Referenzwert verglichen wird. Stimmen beide Werte überein, so schließt sich ein Schritt S14 an. Andernfalls ist der Durchlauf des Flussdiagramms beendet. In Schritt S14 wird die bislang gespeicherte geheime Anzeigeinformation durch die neu eingegebene geheime Anzeigeinformation ersetzt. Damit ist der Durchlauf des Flussdiagramms beendet. Um den vorstehend beschriebenen Ablauf mit möglichst wenig Aufwand zu realisieren, können dabei Standard-Kommandos wie Verify oder Change Reference Data verwendet werden.

## Patentansprüche

1. System mit einem Endgerät (1) und einem tragbaren Datenträger (2), der einem Benutzer zugeordnet ist und mit dem Endgerät (1) kommunizieren kann, wobei eine Funktionalität zum Nachweis der Authentizität des Endgeräts (1) vorgesehen ist, gemäß der eine im tragbaren Datenträger (2) gespeicherte und nur dem Benutzer bekannte geheime Anzeigeinformation wenigstens auszugsweise vom Endgerät (1) angezeigt wird, **dadurch gekennzeichnet, dass** die im tragbaren Datenträger (2) gespeicherte geheime Anzeigeinformation änderbar ist, wenn eine Anwendung, für deren Durchführung eine Identifizierung des Benutzers erforderlich ist, erfolgreich durchgeführt wurde.

2. System nach Anspruch 1, **dadurch gekennzeichnet, dass** die geheime Anzeigeinformation nur dann änderbar ist, wenn der tragbare Datenträger (2) seit der Durchführung der Anwendung nicht außer Betrieb genommen wurde.

3. System nach einem der vorhergehenden Ansprüche, **dadurch gekennzeichnet, dass** anhand eines Zählers geprüft wird, ob die Anwendung erfolgreich durchgeführt wurde.

4. System nach einem der vorhergehenden Ansprüche, **dadurch gekennzeichnet, dass** mit der Anwendung eine digitale Signatur erstellt wird.

5. System nach Anspruch 4, **dadurch gekennzeichnet, dass** die geheime Anzeigeinformation nur dann änderbar ist, wenn davon auszugehen ist, dass in der aktuellen Session mit dem aktuellen Signatur-Schlüssel keine digitale Signatur mehr erstellt wird.

6. System mit einem Endgerät (1) und einem tragbaren Datenträger (2), der einem Benutzer zugeordnet ist und mit dem Endgerät (1) kommunizieren kann, wobei eine Funktionalität zum Nachweis der Authentizität des Endgeräts (1) vorgesehen ist, gemäß der eine im tragbaren Datenträger (2) gespeicherte und nur dem Benutzer bekannte geheime Anzeigeinformation wenigstens auszugsweise vom Endgerät (1) angezeigt wird, **dadurch gekennzeichnet, dass** die im tragbaren Datenträger (2) gespeicherte geheime Anzeigeinformation änderbar ist, wenn wenigstens ein Auszug der geheimen Anzeigeinformation vom Benutzer korrekt eingegeben wurde.

7. System nach Anspruch 6, **dadurch gekennzeichnet, dass** zum Nachweis der Authentizität des Endgeräts (1) und zur Änderung der im tragbaren Datenträger (2) gespeicherten geheimen Anzeigeinformation unterschiedliche Auszüge der Geheininformation verwendet werden.

8. System nach einem der vorhergehenden Ansprüche, **dadurch gekennzeichnet, dass** der tragbare Datenträger (2) als eine Chipkarte ausgebildet ist.

9. Verfahren zum Ändern einer in einem tragbaren Datenträger (2) gespeicherten geheimen Anzeigeinformation, die nur einem Benutzer bekannt ist, dem der tragbare Datenträger (2) zugeordnet ist und die zum Nachweis der Authentizität eines Endgeräts (1), mit dem der tragbare Datenträger (2) kommuniziert, wenigstens auszugsweise vom Endgerät (1) angezeigt wird, **dadurch gekennzeichnet, dass** eine Änderung der geheimen Anzeigeinformation nur dann zugelassen wird, wenn eine Anwendung, für deren Durchführung eine Identifizierung des Benutzers erforderlich ist, erfolgreich durchgeführt wurde.

10. Verfahren zum Ändern einer in einem tragbaren Datenträger (2) gespeicherten geheimen Anzeigeinformation, die nur einem Benutzer bekannt ist, dem der tragbare Datenträger (2) zugeordnet ist und die zum Nachweis der Authentizität eines Endgeräts (1), mit dem der tragbare Datenträger (2) kommuniziert, wenigstens auszugsweise vom Endgerät (1) angezeigt wird, **dadurch gekennzeichnet, dass** eine Änderung der geheimen Anzeigeinformation nur dann zugelassen wird, wenn wenigstens ein Auszug der geheimen Anzeigeinformation vom Benutzer korrekt eingegeben wurde.
